(19) Europäisches Patentamt
European Patent Office
Office européen des brevets

(11) **EP 2 976 607 B1**

(12) **FASCICULE DE BREVET EUROPEEN**

(45) Date de publication et mention
de la délivrance du brevet:
**21.12.2016   Bulletin 2016/51**

(21) Numéro de dépôt: **14710930.0**

(22) Date de dépôt: **19.03.2014**

(51) Int Cl.:
*H04N 5/33* (2006.01)    *G01J 3/36* (2006.01)
*G01S 3/784* (2006.01)    *G01S 3/781* (2006.01)
*G01J 1/04* (2006.01)    *F41G 3/14* (2006.01)

(86) Numéro de dépôt international:
**PCT/EP2014/055538**

(87) Numéro de publication internationale:
**WO 2014/147143 (25.09.2014 Gazette 2014/39)**

(54) **SYSTÈME DE DÉTECTION ET D'IMAGERIE PAR ANALYSE SPECTRALE DANS PLUSIEURS BANDES DE LONGUEURS D'ONDE**

SYSTEM ZUR ERKENNUNG UND ABBILDUNG DURCH SPEKTRALANALYSE IN MEHREREN WELLENLÄNGENBEREICHEN

SYSTEM FOR DETECTION AND IMAGING BY SPECTRAL ANALYSIS IN SEVERAL WAVELENGTH BANDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.03.2013   FR 1352458**

(43) Date de publication de la demande:
**27.01.2016   Bulletin 2016/04**

(73) Titulaire: **Safran Electronics & Defense**
**92100 Boulogne-Billancourt (FR)**

(72) Inventeurs:
• **DUFRESNE DE VIREL, François**
**F-92100 Boulogne-Billancourt (FR)**
• **BOUSQUET, Marc**
**F-92100 Boulogne-Billancourt (FR)**

(74) Mandataire: **Regimbeau**
**20, rue de Chazelles**
**75847 Paris Cedex 17 (FR)**

(56) Documents cités:
JP-A- 2001 201 400    JP-A- 2005 266 625
JP-A- 2006 186 512    US-A- 5 149 970
US-A1- 2004 208 223    US-A1- 2008 122 963

**Description**

**DOMAINE DE L'INVENTION**

La présente invention concerne le domaine des systèmes de détection de tir de missiles ou d'armes à feu utilisant l'analyse des rayonnements générés lors du tir et ou du vol des projectiles ou missiles utilisés. La présente invention s'applique aussi au domaine de la veille sur paysage ou de la détection d'objets dans ces paysages, lorsque le contenu spectral émis par les objets à détecter est important, comme par exemple pour la détection de cibles illuminées par un faisceau laser. Elle s'applique également à tout domaine de veille ou de détection reposant sur l'utilisation différentielle de deux bandes spectrales infrarouges distinctes.

**ETAT DE LA TECHNIQUE**

Une combustion dans l'atmosphère se traduit par un spectre présentant un certain nombre de caractéristiques distinctives et notamment entre 3,5 et 4,2 micromètres et entre 4,55 et 4,8 micromètres. Par ailleurs les différentes longueurs d'onde du spectre d'émission ne subissent pas la même absorption dans l'atmosphère. Le rapport entre l'intensité des rayonnements de longueurs d'onde comprises entre 3,5 et 4,2 micromètres et l'intensité des rayonnements de longueurs d'onde comprises comprise entre 4,55 et 4,8 micromètres varie ainsi fortement en fonction de la distance entre le point de combustion et le détecteur.

Cette propriété est avantageusement utilisée pour détecter les tirs d'arme à feu, qui produisent des émissions dont le ratio entre les intensités dans les deux bandes spectrales est caractéristique, le départ et le vol de missiles propulsés correspondant à une combustion se rapprochant du système de détection, par rapport à des objets qui soit ne correspondraient pas à des combustions (reflets solaires sur les surfaces de l'eau ou sur les nuages), soit ne se rapprocheraient pas du système de détection. La demande EP1718067A1 par exemple propose un procédé de détection de tirs utilisant ces propriétés.

Toutefois, un tel procédé ne permet pas de détecter efficacement des tirs d'arme légère. En effet pour détecter des tirs d'armes légères, il est nécessaire de pouvoir détecter en temps réel les rayonnements dans ces deux bandes spectrales de façon simultanée et avec une très bonne résolution spatiale et une très grande sensibilité.

On peut certes utiliser deux voies spectrales partiellement ou complètement différentes mais de tels systèmes sont chers et encombrants. De plus, la performance des systèmes fonctionnant sur ce principe repose en grande partie sur la stabilité, en fonction des différentes conditions opérationnelles, des niveaux de signal dans les bandes spectrales considérées et de leurs rapports respectifs. On se doit donc d'utiliser des systèmes offrant très peu de différences entre les voies spectrales et donc rechercher un maximum d'éléments communs.

La détection de tirs d'armes légères, caractérisés par une faible intensité et une faible dimension spatiale, nécessite l'utilisation de systèmes dont la définition optique est adaptée à ces petites tailles spatiales, avec une résolution optique - un spot optique (aussi appelé PSF «Point Spread Function ») - sensiblement égale à la taille d'un détecteur. De plus les performances recherchées imposent souvent d'utiliser un capteur refroidi, de façon à obtenir une grande sensibilité de détection.

Le document US7592593_B2, par exemple, propose un capteur d'imagerie dont les capteurs élémentaires sont répartis spatialement entre deux types, chacun de ceux-ci étant sensible à une des deux bandes spectrales considérées. Toutefois cette solution impose de réaliser un capteur intégrant deux technologies différentes. Outre les difficultés de réalisation de ce type de capteur, les variations de performances entre les deux types de capteurs élémentaires sont peu compatibles avec les objectifs d'uniformité visés pour une bonne performance de ces systèmes. Cette solution souffre aussi du fait que les deux composantes spectrales sont mesurées en des points différents de l'objet. Lorsqu'il s'agit d'un objet dont la dimension image sur le capteur est inférieure à la taille du capteur élémentaire ou à celle du spot optique, par exemple une flamme d'arme à feu vue à grande distance, l'une des deux voies ne verra pas cet objet et l'on induit ainsi des phénomènes de masquage fort gênants. Lorsque la dimension image de l'objet est supérieure à la taille du capteur élémentaire ou à celle du spot optique le fait de ne pas mesurer les deux composantes spectrales au même endroit sur l'objet ou sur la scène fausse la comparaison et peut entrainer une absence de détection. Pour éviter tous ces problèmes et éviter tout masquage, il est nécessaire, par adaptation du spot optique, de couvrir les deux types de capteurs élémentaires pour un point objet visé. Cela induit donc, pour le système de détection, une perte de résolution optique de l'ordre de deux par rapport à la taille des capteurs élémentaires et impose d'avoir une optique dont la résolution optique - le spot optique - est optimisée pour être sensiblement égale à la dimension de deux capteurs élémentaires.

Si l'on veut utiliser un capteur monotype, il est possible d'équiper celui-ci d'une matrice de filtres de type Bayer ou autre afin d'obtenir deux gammes de sensibilité pour les détecteurs élémentaires comme le propose le brevet US8014062_B2. Cette solution présente le désavantage, comme décrit précédemment, de ne pas regarder, au niveau du capteur, exactement la même zone de la scène entre les deux gammes de sensibilité. Cela est prohibitif dans le cas de petits objets à détecter, objets dont la taille apparente sur le plan du capteur est de l'ordre ou inférieur à la taille d'un capteur élémentaire. On peut certes, comme précédemment, dégrader la résolution de l'optique d'imagerie - son spot optique - pour couvrir deux détecteurs adjacents, mais cela va à l'encontre du besoin de résolution nécessaire pour détecter ce type de cibles.

Une autre solution est l'utilisation de capteurs dont les capteurs élémentaires sont constitués d'un empilage de deux types de capteurs, et par exemples ceux décrits dans les documents EP1915781_B1, US8238026_B1, US 7,655,911_B2, US6236508_B1, mais ces solutions impliquent l'utilisation d'une optique compliquée, puisqu'il est nécessaire d'avoir un plan image distinct pour chaque bande de longueurs d'onde, et d'un capteur complexe à réaliser et donc cher à l'emploi. Ce type de solution ne peut donc convenir à la résolution du problème posé qui vise à la simplicité du système de détection, son homogénéité entre les deux voies, et à l'utilisation d'un capteur standard à coût réduit.

On peut aussi envisager des systèmes où l'exploration des bandes spectrales est faite par l'utilisation d'un élément mobile et notamment ceux décrits dans les documents US7760227_B2 ou EP1564987_A1, mais ces systèmes ne peuvent convenir, car l'analyse des deux bandes spectrales n'est pas simultanée et ne permet donc pas de comparer valablement le signal de cibles émettant de façon très brève, qui doivent être observés en temps réel, de façon simultanée.

Des solutions à prisme optique, comme celle décrit dans le document EP2221655_A1, peuvent aussi être considérées mais, outre une ou des optiques complexes, ces solutions imposent de placer le prisme dans en espace pupillaire ou équivalent, espace où la propagation des rayons se fait en « rayons parallèles » selon l'expression consacrée. Cela va à l'encontre de la compacité du système, du fait de la création nécessaire de cet espace pupillaire réel, est aussi de coût élevé du fait de la complexité de réalisation de l'optique et donc ne convient pas pour ces raisons.

Les documents JP 2001 201400 A, US 5 149 970 A, JP 2005 266625 A, JP 2006 186512 A, US 2004/208223 A1 et US 2008/122963 présentent d'autres systèmes relevant de l'état de la technique.

## EXPOSE DE L'INVENTION

Le but de l'invention est de proposer un système simple et compact de détection dans plusieurs bandes spectrales différentes, de façon simultanée, et avec une très bonne résolution spatiale et une bonne uniformité entre voies.

L'objet de l'invention est défini par les revendications 1-16.

A cet effet, l'invention propose un système de détection et d'imagerie infrarouge par analyse spectrale dans plusieurs bandes de longueurs d'onde comportant :

- un capteur d'imagerie comportant une pluralité de capteurs élémentaires formant ensemble une surface sensible matricielle;
- une optique d'imagerie adaptée pour former sur la surface sensible du capteur d'imagerie, une première image de la scène à analyser dans une première bande de longueurs d'onde, et au moins une seconde image de la scène à analyser dans une seconde bande de longueurs d'onde,

dans lequel le système de détection et d'imagerie comporte en outre un dispositif optique constitué d'une lame optique fixe et adapté pour décaler la première image par rapport à la seconde image dans le plan de la surface sensible, le décalage entre les images étant selon une direction définie par une ligne, une colonne ou une diagonale de capteurs élémentaires, la distance de décalage étant égale au pas des capteurs élémentaires de la surface sensible matricielle selon cette direction ou à un multiple de ce pas.

La lame optique fixe permet d'obtenir un décalage de quelques pixels seulement. Ce faible décalage de quelques pixels est avantageux car les deux images obtenues sont vues par des zones quasiment identiques du capteur d'imagerie, ce qui réduit les écarts dus aux non uniformités du capteur d'imagerie.

De plus, le fait d'être produites pour un champ quasiment identique par le système d'imagerie réduit les écarts qui pourraient être induits par les aberrations optiques du système d'imagerie et leurs variations dans le cas d'un fonctionnement dans le champ très différent entre les deux images (cas où le décalage entre les deux images est important, c'est-à-dire d'une taille comparable à la taille des images produites).

Du fait de l'utilisation d'une unique lame optique, le décalage des deux images est obtenu essentiellement par le choix du matériau, de l'épaisseur et de l'inclinaison de la lame optique. Le dispositif ne nécessite pas de réglages très précis, compte tenu des précisions que l'on peut obtenir en fabrication pour l'épaisseur et l'inclinaison de la lame optique ce qui permet une fabrication simple sans ajustement particulier.

Par ailleurs, la lame optique est adaptée pour fonctionner en rayons convergents et non en rayons collimatés. Ce fonctionnement en rayons convergents permet de placer le dispositif dans des espaces disponibles à l'intérieur du système de détection et d'imagerie sans trop augmenter le volume de celui-ci. En particulier, on peut placer ledit dispositif entre la dernière lentille de l'optique d'imagerie et le capteur d'imagerie. Dans le cas particulier où celui-ci est refroidi et est placé dans une enceinte sous vide, ledit dispositif peut servir de hublot à cette enceinte sous vide.

L'invention est avantageusement complétée par les caractéristiques suivantes, prises individuellement ou en l'une quelconque de leurs combinaisons techniquement possibles :

- l'optique d'imagerie est un système optique de focalisation, la lame optique fixe étant positionnée entre l'optique d'imagerie et le capteur d'imagerie ;
- le dispositif optique fixe est non prismatique ;
- le dispositif optique fixe est une lame optique à faces planes et parallèles réalisée dans un matériau chromatique, ladite lame étant fixe et inclinée par rapport au plan de la surface sensible du capteur d'imagerie ;
- l'angle d'inclinaison de ladite lame, l'épaisseur de celle-ci et son matériau sont adaptés pour que la distance de décalage soit égale au pas des capteurs élémentaires de la surface sensible matricielle, selon la direction de décalage ou à un multiple de ce pas ;
- la distance de décalage est égale à une, deux ou trois fois la entre deux capteurs élémentaires de la surface sensible matricielle selon cette direction ;
- le matériau optique chromatique de la lame, présente un coefficient de dispersion chromatique supérieur à 0,002 et de préférence à 0,005 ;
- la lame est en un matériau qui est choisi parmi les matériaux suivants :

    Saphir, Fluorure de Calcium, Fluorure de Barium, Fluorure de Sodium, Fluorure de Magnésium ou Oxyde de Magnésium et Silice ;

- le système de détection et d'imagerie comporte un filtre passe bandes adapté pour optimiser le rapport des intensités des rayonnements dans la première et la deuxième bande de longueurs d'onde ;
- l'optique d'imagerie est adaptée pour que sa résolution optique - son spot optique ou PSF - correspondant à l'image par l'optique d'imagerie d'une source ponctuelle sur la surface sensible du capteur d'imagerie - soit de dimensions sensiblement égales à celles d'un capteur élémentaire de la surface sensible matricielle ;
- le système de détection et d'imagerie comporte un filtre passe bande spatialement sélectif constitué d'une alternance de premiers filtres élémentaires laissant passer les longueurs d'onde comprises dans la première bande de longueurs d'onde et de seconds filtres élémentaires laissant passer les longueurs d'onde comprises dans la seconde bande de longueurs d'onde et positionnés sur ou au voisinage de la surface sensible du capteur d'imagerie ;
- les premiers filtres élémentaires et les seconds filtres élémentaires du filtre passe bande spatialement sélectif sont disposés selon une répartition matricielle en damier et sont d'une largeur égale au pas, dans la direction de décalage, des capteurs élémentaires de la surface sensible matricielle ;
- les premiers filtres élémentaires et les seconds filtres élémentaires sont disposés en bandes perpendiculaires à la direction du décalage et sont d'une largeur égale au pas, dans la direction de décalage, des capteurs élémentaires de la surface sensible matricielle ;
- dans les trois configurations précédentes, l'optique d'imagerie est adaptée pour que sa résolution optique - son spot optique ou PSF - correspondant à l'image d'une source ponctuelle sur la surface sensible du capteur d'imagerie - soit de dimension sensiblement égale à deux fois le pas, dans la direction de décalage, des capteurs élémentaires de la surface sensible matricielle ;
- dans ces trois mêmes configurations, l'optique d'imagerie est adaptée pour que sa résolution optique - son spot optique ou PSF - correspondant à l'image d'une source ponctuelle sur la surface sensible du capteur d'imagerie - soit de dimension sensiblement égale au pas, dans la perpendiculaire à celle du décalage, des capteurs élémentaires de la surface sensible matricielle ;
- le capteur d'imagerie et le dispositif optique fixe sont placés dans une enceinte cryogénique ;
- la lame constitue un hublot d'une enceinte cryogénique contenant le capteur d'imagerie ;
- les deux bandes spectrales sont choisies parmi les bandes spectrales suivantes :
- bandes infrarouges IIa ou IIb ;
- bande infrarouge I ;
- une ou deux bandes laser infrarouges ;
- bande proche infrarouge.

## DESCRIPTION DES FIGURES

D'autres objectifs, caractéristiques et avantages sortiront de la description détaillée qui suit en référence aux dessins donnés à titre illustratif et non limitatif parmi lesquels :

- la figure 1 représente le spectre d'émission d'une combustion liée à un tir ;
- les figures 2, 14 et 15 représentent schématiquement trois exemples de dispositifs selon l'invention ;
- la figure 3 illustre schématiquement un agencement d'un capteur d'imagerie et d'une lame à face planes et parallèles selon l'invention ;
- la figure 4 illustre schématiquement la surface sensible matricielle et l'agencement des capteurs élémentaires.
- la figure 5 illustre schématiquement le trajet optique d'un faisceau dans une lame à faces planes et parallèles et focalisée sur la surface sensible selon l'invention ;
- les figures 6,7,10 et 12 illustrent schématiquement les trajets optiques des faisceaux, symbolisés par leurs axes de propagation, dans divers exemples de dispositifs selon l'invention ;
- les figures 8, 9, 11, 13, 16, 17 et 18 représentes les images d'un élément d'une scène à analyser dans deux bandes de longueurs d'onde sur une surface sensible d'un capteur d'imagerie selon l'invention ;
- les figures 16, 17 et 18 représentent des filtres passe-bande spatialement sélectifs selon l'invention.

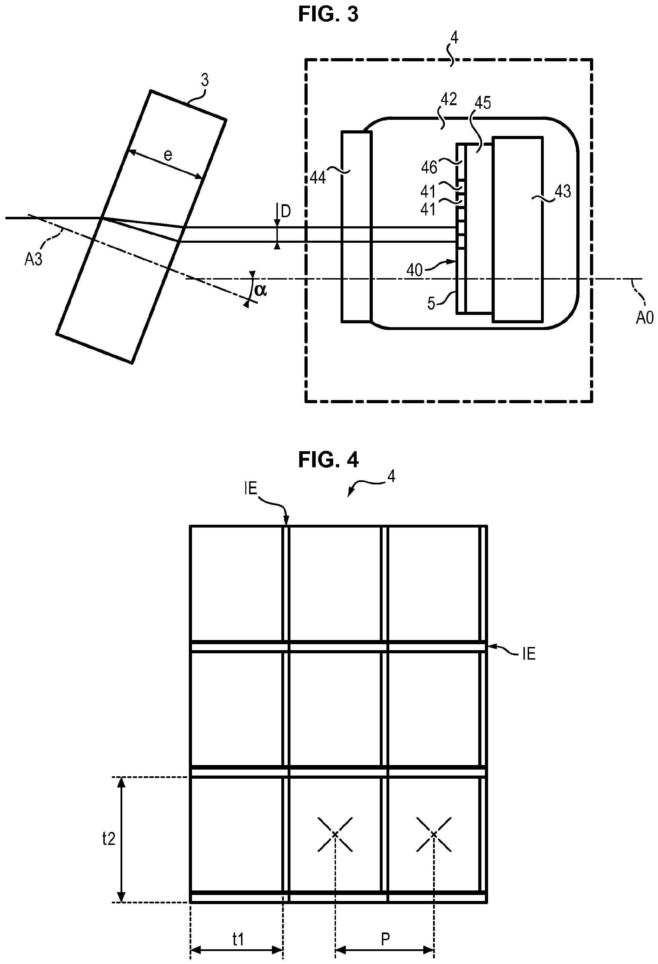

Pour des raisons de simplification et de clarté des schémas, seuls les axes de propagation des faisceaux correspondant à chaque bande spectrale et à une cible visée, ponctuelle, à l'infini, dont l'image est focalisée sur la surface sensible du capteur, ont été représentés sur les figures 3, 6, 7, 10, et 12.

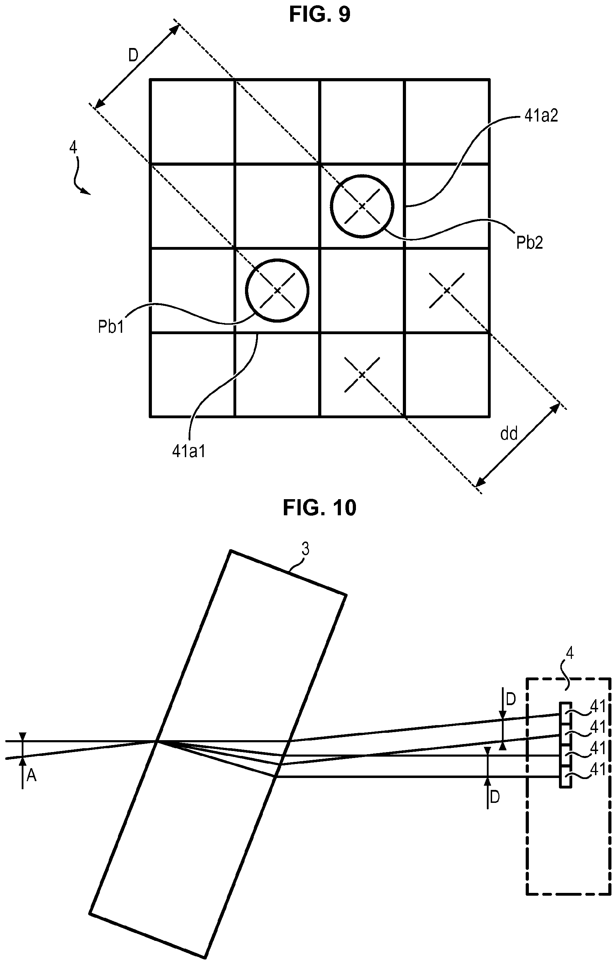

Sur la figure 10, ce sont les enveloppes des faisceaux de rayons qui sont représentées.

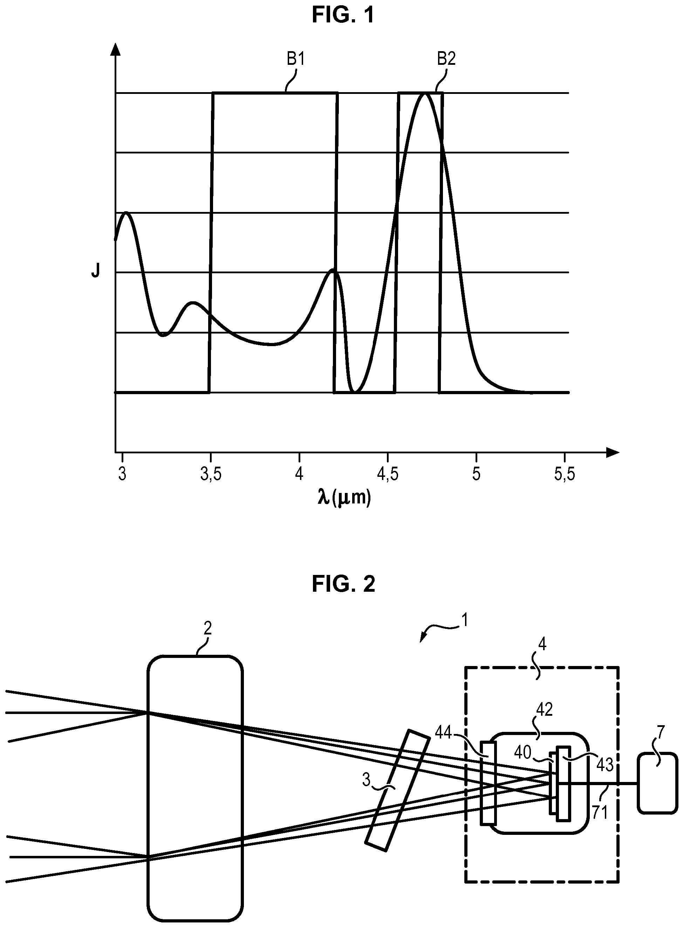

Sur les figures 2, 14 et 15, la représentation des faisceaux optiques est faite de façon simplifiée au seul titre d'illustration de l'invention et de ses modes de réalisation.

## DESCRIPTION DETAILLEE D'UN OU PLUSIEURS MODES DE REALISATION

En référence à la figure 1, le spectre d'émission d'une combustion liée à un tir d'arme à feu présente des caractéristiques d'intensité J dans une première bande de longueurs d'onde B1 correspondant à des longueur d'onde comprises entre 3,5 et 4,2 micromètres et centrées sur 3850 nm (bande spectrale IR IIa) et d'autres caractéristiques d'intensité dans une deuxième bande de longueurs d'onde B2 correspondant à des longueur d'onde comprises entre 4,55 et 4,8 micromètres et centrées sur 4675 nm (bande IR IIb), correspondant aux bandes délimitées en créneaux sur la figure 1.

En référence à la figure 2, un système de détection et d'imagerie 1 selon l'invention comporte un capteur d'imagerie 4, un bloc de traitement 7 adapté pour analyser les données transmises par le capteur d'imagerie 4 par l'intermédiaire d'un dispositif de connexion 71, une optique d'imagerie 2 et un dispositif optique 3 fixe et positionné entre l'optique d'imagerie 2 et le capteur d'imagerie 4. Le dispositif optique 3 est constitué d'une unique lame optique fixe à faces planes et parallèles.

En référence à la figure 3, l'axe A3 perpendiculaire au plan de la lame à face parallèle 3 forme un angle d'inclinaison $\alpha$ non nul avec l'axe optique AO du capteur d'imagerie 4. Le capteur d'imagerie 4 comporte une pluralité de capteurs élémentaires 41 formant une matrice de détection 46 présentant une surface sensible matricielle 40 perpendiculaire à son axe optique AO. Le capteur 4 comporte en outre un dispositif d'alimentation et de lecture 45 des capteurs élémentaires 41. Le capteur d'imagerie 4 est typiquement un capteur matriciel IR-CCD, IR-CID ou IR-CMOS. La fréquence d'échantillonnage du capteur d'imagerie 4 est adaptée à la détection d'événements rayonnants tels que des tirs. Le capteur d'imagerie 4 comporte en outre un système de refroidissement 43 positionné derrière la surface sensible 40 et est entouré d'une enceinte cryogénique 42 présentant un hublot 44 adapté pour laisser passer les rayonnements dans les deux bandes de longueurs d'onde B1 et B2. Le capteur d'imagerie 4 est sensible aux rayonnements appartenant aux deux bandes de longueurs d'onde B1 et B2.

L'optique d'imagerie 2 est un système optique de focalisation adapté pour donner une image réelle de la scène à analyser sur la surface sensible 40 du capteur d'imagerie 4. L'optique d'imagerie 2 tient compte, pour son optimisation, de la présence de la lame 3 sur le trajet optique des rayons. Avantageusement, cette optique aura une résolution optique, souvent définie par son spot optique (Point Spread Function ou PSF) et correspondant à l'image d'une source ponctuelle sur la surface sensible 40 du capteur d'imagerie 4, sensiblement égale à la taille d'un capteur élémentaire t1 et t2 de la surface sensible matricielle utilisée ou encore au pas p des capteurs élémentaires de la surface sensible matricielle (ces deux tailles étant très proches, l'optimisation des capteurs matriciels étant faite pour minimiser l'inter-espace entre capteurs élémentaires). En référence à la figure 4, par taille des capteurs élémentaires 41, on entend la dimension, dans la direction considérée, de la surface active de ces dits capteurs, et par pas, la distance entre le centre de deux capteurs élémentaires 41 consécutifs dans cette même direction et l'inter-espace IE la zone non active de la surface sensible matricielle, située entre capteurs élémentaires voisins. Pour l'optimisation du système de détection et d'imagerie 1, on prendra en compte la taille des capteurs élémentaires 41 pour l'optimisation de l'optique d'imagerie 2 et le pas des capteurs élémentaires de la surface sensible matricielle dans la direction considérée pour le choix du décalage D selon cette même direction. Le matériau utilisé pour la matrice de détection pourra être, par exemple, de l'InSb, du HgCdTe, matériaux adaptés à une utilisation dans ces deux bandes spectrales.

Un matériau chromatique est caractérisé par son indice de réfraction et la dispersion chromatique de celui-ci en fonction de la longueur d'onde. Lorsqu'un faisceau passe, avec une incidence non nulle, d'un milieu ayant un premier indice de réfraction à un milieu ayant un deuxième indice de réfraction, le faisceau est dévié selon les lois de Snell-Descartes. Cette déviation est produite de façon différente entre deux longueurs d'onde différentes, puisque l'indice de réfraction est différent.

La lame optique à faces planes et parallèles 3 est réalisée dans un matériau chromatique présentant un premier indice de réfraction moyen n($\lambda$1) pour des longueurs d'onde incluses dans une premier bande de longueurs d'onde B1 correspondant à des rayonnements centrés autour d'une première longueur d'onde $\lambda$1 et un second indice de réfraction moyen n($\lambda$2) pour des longueurs d'onde incluses dans une seconde bande de longueurs d'onde B2 correspondant à des rayonnements centrés autour d'une seconde longueur d'onde $\lambda$2.

En référence aux figures 2, 5, 14 et 15, la lame optique fixe est positionnée entre l'optique d'imagerie 2 et le capteur d'imagerie 4. La lame optique est adaptée pour fonctionner en rayons convergents et non en rayons collimatés. Ce fonctionnement en rayons convergents permet de placer le dispositif dans des espaces disponibles à l'intérieur du système de détection et d'imagerie sans trop augmenter le volume de celui-ci. En particulier, on peut placer ledit dispositif entre la dernière lentille de l'optique d'imagerie 2 et le capteur d'imagerie 4. Dans le cas particulier où celui-ci est refroidi et est placé dans une enceinte sous vide, ledit dispositif peut servir de hublot à cette enceinte sous vide.

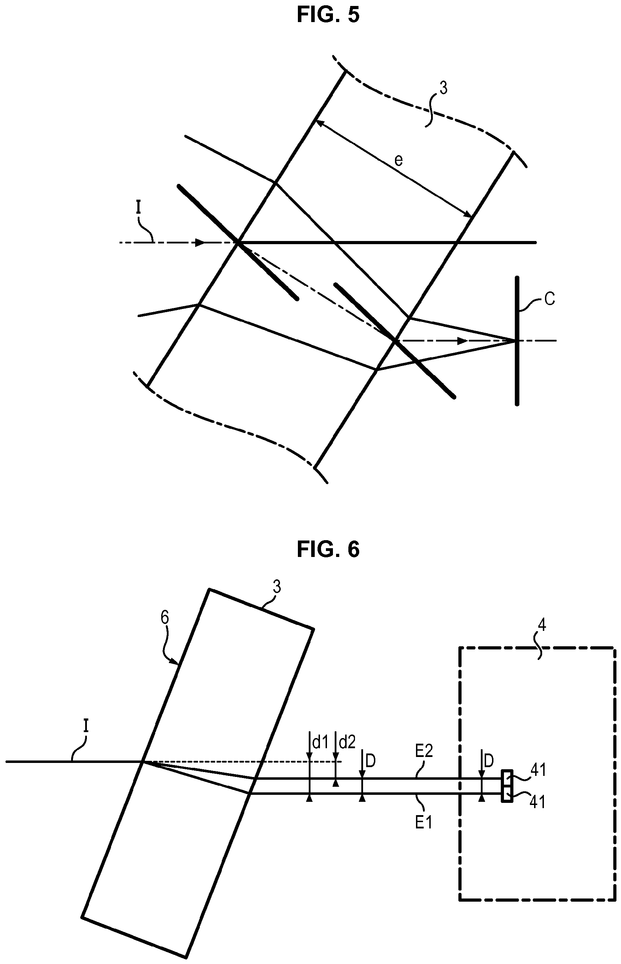

En référence aux figures 5, 6 et 7, un faisceau incident I présentant un spectre contenant notamment la première B1 et la deuxième B2 bande de longueurs d'onde est incident sur la lame à faces planes et parallèles 3. La lame optique 3 est adaptée pour transmettre les rayonnements dans les deux bandes de fréquence. Les composantes du faisceau incident I appartenant à la première bande de longueurs d'onde B1 sont déviées d'une première distance d1 tandis que les composantes du faisceau incident I appartenant à la seconde bande de longueurs d'onde B2 sont déviées d'une seconde distance d2. On a donc en sortie de la lame à face parallèle deux faisceaux émergents E1 et E2 de longueurs d'onde comprises respectivement dans la première B1 et dans la deuxième B2 bande de longueurs d'onde.

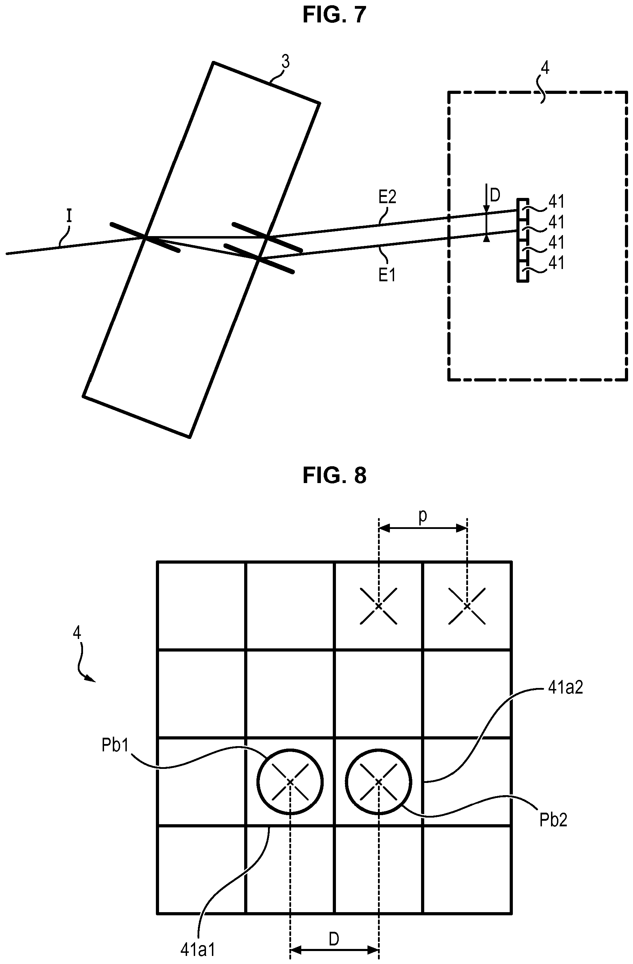

La figure 5 représente le faisceau issu d'un objet ponctuel visé traversant « en rayons convergents » la lame 3 et venant se focaliser sur la surface sensible en une image C, tandis que les figures 6 et 7 représentent uniquement les axes de propagation des faisceaux issus d'un objet visé. La figure 6 représente à l'axe de propagation d'un faisceau issu d'un objet visé placé sur l'axe de visé tandis que la figure 7 représente l'axe de propagation d'un faisceau issu d'un objet visé placé dans le champ.

Le fonctionnement du dispositif en rayons convergents permet d'obtenir un décalage de quelques pixels seulement, ce qui ne pourrait être obtenu si le dispositif était placé en rayons collimatés. Ce faible décalage de quelques pixels est avantageux car les deux images obtenues sont vues par des zones quasiment identiques du capteur d'imagerie 4, ce qui réduit les écarts dus aux non uniformités du capteur d'imagerie 4. De plus le fait d'être produites pour un champ quasiment identique par le système d'imagerie réduit les écarts qui pourraient être induits par les aberrations optiques du système d'imagerie et leurs variations dans le cas d'un fonctionnement dans le champ très différent entre les deux images (cas où le décalage entre les deux images est important, c'est-à-dire d'une taille comparable à la taille des images produites).

Du fait de l'utilisation d'une unique lame optique 3, le décalage des deux images est obtenu essentiellement par le choix du matériau, de l'épaisseur et de l'inclinaison de la lame 3. Le dispositif ne nécessite pas de réglages très précis, compte tenu des précisions que l'on peut obtenir en fabrication pour l'épaisseur et l'inclinaison de la lame 3 et peut donc être positionné correctement lors de la fabrication du système de détection et d'imagerie sans ajustement particulier.

Contrairement à un prisme, la lame optique à faces planes et parallèles 3 n'introduit pas de déviation angulaire mais uniquement un décalage transversal D qui correspond à la différence entre la première distance d1 et la seconde distance d2. Les axes de propagation des faisceaux émergents E1 et E2 sont donc parallèles à l'axe de propagation du faisceau incident I.

Les première d1 et seconde d2 distances dépendent de l'épaisseur e de la lame à faces planes et parallèles 3, de l'angle d'inclinaison $\alpha$ de la lame à faces planes et parallèles 3 et des caractéristiques du matériau dans lequel est réalisée la lame 3.

Les tableaux ci-dessous donnent les résultats obtenus pour quelques configurations et matériaux, donnés à titre illustratif et non limitatif pour un pas p entre deux capteurs élémentaires 41 de 10 $\mu$m, le pas p entre deux capteurs élémentaires 41 étant défini comme la distance entre les centres de deux capteurs élémentaires adjacents selon la direction de décalage considérée. D'autres dimensions peuvent bien sûr être envisagées (12,5 $\mu$m, 15 $\mu$m) pour lesquelles un calcul similaire peut être conduit.

Le premier tableau donne les résultats obtenus pour un décalage D correspondant au pas p entre deux capteurs élémentaires 41.

| Matériau | Saphir | CaF2 | MgO | BaF2 | NaF2 | MgF2 |
|---|---|---|---|---|---|---|
| Épaisseur e en mm | 3,92 | 13 | 4,55 | 11,4 | 7,75 | 5,8 |
| Angle $\alpha$ ° | 10 | 10 | 10 | 15 | 15 | 15 |
| Angle $\alpha$ rad | 0,175 | 0,175 | 0,175 | 0,262 | 0,262 | 0,262 |

(suite)

| Matériau | Saphir | CaF2 | MgO | BaF2 | NaF2 | MgF2 |
|---|---|---|---|---|---|---|
| $\lambda$2 nm | 4675 | 4675 | 4675 | 4675 | 4675 | 4675 |
| $\lambda$1 nm | 3850 | 3850 | 3850 | 3850 | 3850 | 3850 |
| n($\lambda$2) | 1,641 | 1,403 | 1,637 | 1,450 | 1,301 | 1,339 |
| n($\lambda$1) | 1,681 | 1,411 | 1,671 | 1,457 | 1,309 | 1,351 |
| Décalage D en $\mu$m | 10,019 | 10,061 | 10,009 | 10,092 | 10,058 | 10,085 |

Le deuxième tableau donne les résultats obtenus pour un décalage D correspondant à 1,4 fois le pas p entre deux capteurs élémentaires 41 (décalage en diagonal par rapport aux lignes des capteurs élémentaires).

| Matériau | Saphir | Saphir | Mg0 | Mg0 | MgF2 |
|---|---|---|---|---|---|
| Épaisseur e en mm | 5,5 | 3,62 | 6,4 | 4,2 | 8,1 |
| Angle $\alpha$° | 10 | 15 | 10 | 15 | 15 |
| Angle a rad | 0,175 | 0,262 | 0,175 | 0,262 | 0,262 |
| $\lambda$2 nm | 4675 | 4675 | 4675 | 4675 | 4675 |
| $\lambda$1 nm | 3850 | 3850 | 3850 | 3850 | 3850 |
| n($\lambda$2) | 1,641 | 1,641 | 1,6373 | 1,6373 | 1,339 |
| n($\lambda$1) | 1,681 | 1,681 | 1,6714 | 1,6714 | 1,351 |
| Décalage D en $\mu$m | 14,057 | 14,059 | 14,078 | 14,039 | 14,085 |

Le troisième tableau donne les résultats obtenus pour un décalage D correspondant à trois fois le pas p entre deux capteurs élémentaires 41.

| | Saphir | Saphir | Mg0 | Mg0 | MgF2 |
|---|---|---|---|---|---|
| Épaisseur e en mm | 11,75 | 7,73 | 13,65 | 9 | 17,3 |
| Angle $\alpha$° | 10 | 15 | 10 | 15 | 15 |
| Angle $\alpha$ rad | 0,175 | 0,262 | 0,175 | 0,175 | 0,262 |
| $\lambda$2 nm | 4675 | 4675 | 4675 | 4675 | 4675 |
| $\lambda$1 nm | 3850 | 3850 | 3850 | 3850 | 3850 |
| n($\lambda$2) | 1,641 | 1,641 | 1,637 | 1,637 | 1,339 |
| n($\lambda$1) | 1,681 | 1,681 | 1,671 | 1,671 | 1,351 |
| Décalage D en $\mu$m | 30,031 | 30,022 | 30,026 | 30,084 | 30,082 |

Il est nécessaire de prévoir une lame optique 3 relativement épaisse pour obtenir le déplacement D souhaité, sans toutefois introduire un angle $\alpha$ trop important qui serait pénalisant au niveau de l'encombrement ou induirait trop d'aberrations optiques. Tous les matériaux optiques transparents dans la bande 3-5 $\mu$m ne peuvent convenir, en particulier ceux dont l'indice de réfraction est élevé comme le Germanium, le Silicium, le ZnSe ou le ZnS, car ces matériaux sont peu chromatiques et nécessitent d'utiliser des épaisseurs de lame trop importantes, pour les bandes spectrales considérées, ce qui conduirait à des solutions chères, encombrantes et de poids élevé.

Un matériau chromatique peut être caractérisé par un coefficient de dispersion chromatique dans les deux bandes de longueurs d'onde considérées, définie comme le rapport entre la différence des indices moyens pour les deux bandes spectrales et leur valeur moyenne :

$$Coef_{dispersion} = 2.\frac{n(\lambda 1) - n(\lambda 2)}{n(\lambda 1) + n(\lambda 2)}$$

Avec n($\lambda$i) indice de réfraction du matériau pour la longueur d'onde moyenne $\lambda$i de la bande spectrale i considérée.

On privilégie des matériaux ayant des coefficients de dispersion chromatique élevés. Pour obtenir des lames d'épaisseur raisonnable (typiquement inférieure à 10 mm), il convient de choisir des matériaux présentant un coefficient de dispersion chromatique supérieur à 0,002 et de préférence supérieur à 0,005. Cela correspond, en fonction des matériaux habituellement utilisés et pour le cas exposé, à des matériaux à indice de réfraction faible (inférieur à n=2).

Le matériau de la lame optique 3 est transparent dans les bandes spectrales B1 et B2 et le coefficient de dispersion chromatique pour deux bandes de longueurs d'onde B1 et B2 du matériau sont compatibles avec la réalisation d'une lame d'une épaisseur adaptée aux environnements considérés pour le système ou le capteur.

On choisit donc préférentiellement une lame 3 en un matériau choisi parmi les matériaux suivants : Saphir, Fluorure de Calcium, Fluorure de Barium, Fluorure de Sodium, Fluorure de Magnésium, Oxyde de Magnésium ou Silice.

Le capteur d'imagerie 4 possède par exemple un pas entre deux capteurs élémentaires 41 de 10 $\mu$m et un nombre de capteurs élémentaires de 1024, soit une largeur utile du capteur d'imagerie 4 de 10 mm environ. L'épaisseur de la lame est typiquement de 4 mm et l'angle d'inclinaison $\alpha$ de la lame de 10°. La lame 3 présente une largeur adaptée à son épaisseur e afin de garantir sa solidité et sa tenue aux environnements prévus pour le système de détection.

Le système de détection 1 produit sur la surface sensible 40 du capteur d'imagerie 4, deux images Pb1 et Pb2 correspondant aux deux bandes de longueurs d'onde B1 et B2 et décalées l'une par rapport à l'autre d'un capteur élémentaire 41.

L'épaisseur de la lame optique 3, l'inclinaison de celle-ci et son matériau sont adaptés pour que la distance de décalage soit égale à une, deux ou trois fois la distance entre deux capteurs élémentaires de la surface sensible matricielle selon la direction de décalage.

Selon une première variante de réalisation, et en référence à la figure 8, l'optique d'imagerie 2 est adaptée pour former, sur la surface sensible 40 du capteur d'imagerie 4, une première image Pb1 de la scène à analyser dans une première bande de longueurs d'onde B1, et une seconde image Pb2 de la scène à analyser dans une seconde bande de longueurs d'onde B1. La lame 3 est adaptée pour que la première image Pb1 soit décalée, dans le plan de la surface sensible 40 du capteur d'imagerie 4, d'une distance D égale au pas p dans le direction d'une ligne ou d'une colonne de capteurs élémentaires 41, par rapport à la seconde image Pb2, le pas p des capteurs élémentaires étant défini comme la distance entre les centres de deux capteurs élémentaires adjacents.

Selon une seconde variante de réalisation et en référence à la figure 9, la lame 3 est adaptée pour que la première image Pb1 soit décalée, dans le plan de la surface sensible 40 du capteur d'imagerie 4, d'une distance D égale à un multiple du pas dd dans la direction d'une diagonale de capteurs élémentaires 41 définie comme la distance entre les centres de deux capteurs élémentaires 41 positionnés en diagonale l'un de l'autre, par rapport à la seconde image Pb2. En référence à la figure 9 et pour un objet visé de dimension angulaire inférieure à la couverture d'un capteur élémentaire 41, le système de détection et d'imagerie 1 produit deux images Pb1 et Pb2 correspondant chacune à une des deux bandes de longueurs d'onde B1 et B2 sur deux capteurs élémentaires adjacents respectivement 41a1 et 41 a2. Chacun de ces deux capteurs élémentaires 41ba1 et 41 a2, reçoit le rayonnement émis par l'objet visé uniquement dans une des deux bandes de longueurs d'onde B1 et B2. Le bloc de traitement 7 analyse les signaux reçus par ces deux capteurs élémentaires 41a1 et 41 a2 et mesure le rapport des intensités du rayonnement de l'objet visé dans les deux bandes de longueurs d'onde B1 et B2. Le bloc de traitement 7 analyse l'évolution de ce rapport et déclenche une alerte en cas de détection de la signature spectrale différentielle de l'événement à détecter et engage un processus de suivi de cette cible.

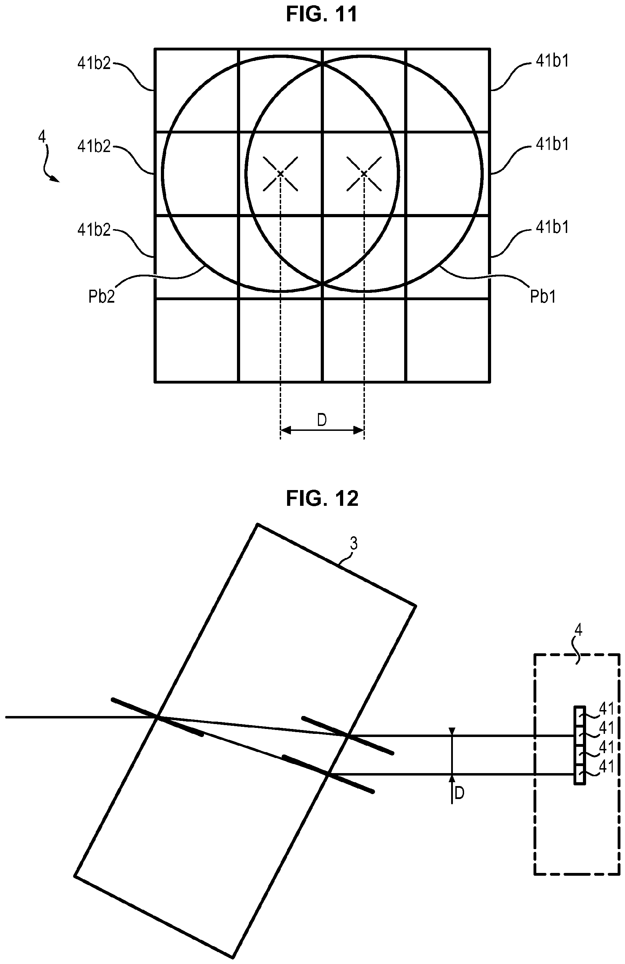

En référence aux figures 10 et 11, pour un objet visé de dimension angulaire A supérieure à la couverture d'un capteur élémentaire 41, les deux images correspondant aux deux bandes de longueurs d'onde B1 et B2 formées sur la surface sensible 40 du capteur d'imagerie 4 se chevauchent. Le bloc de traitement 7 analyse les signaux reçus par les capteurs élémentaires positionnés en bordure des deux images qui sont les seuls capteurs élémentaires 41 b1 et 41 b2 à détecter les rayonnements émis par la combustion appartenant uniquement à l'un ou l'autre des bandes de longueurs d'onde à analyser respectivement B1 et B2.

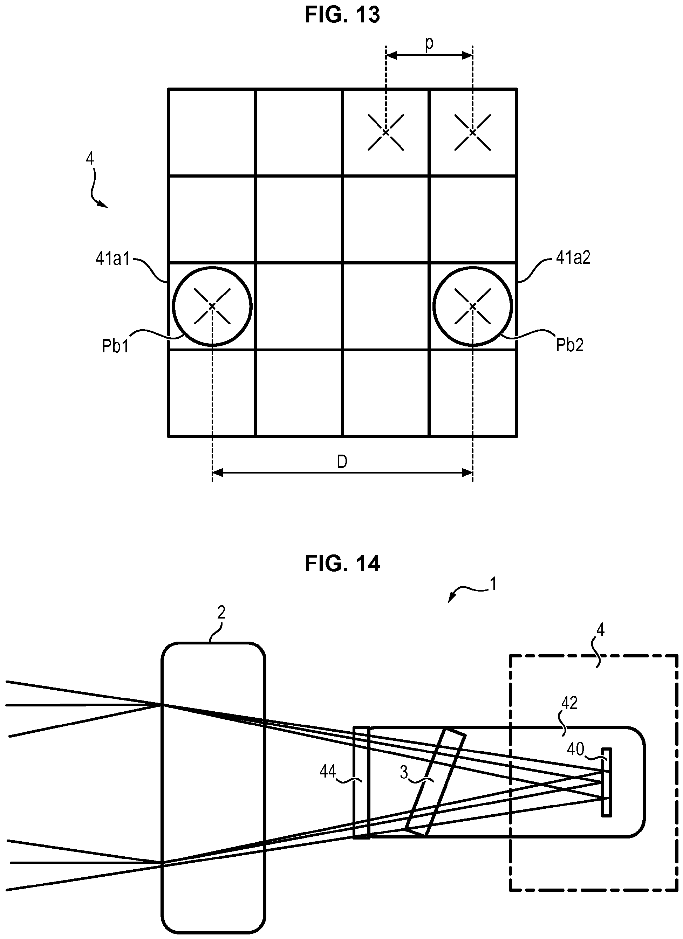

En référence aux figures 12 et 13, pour faciliter le fonctionnement des algorithmes de détection du bloc de traitement 7, il peut être utile de décaler l'image Pb1 de la première bande de longueurs d'onde B1 par rapport à l'image Pb2 de la seconde bande de longueurs d'onde B2 de plus d'un capteur élémentaire 41 et typiquement de trois capteurs élémentaires 41 de façon à mieux détacher l'objet à détecter du fond adjacent local. L'image formée par les rayons appartenant à une première bande de longueurs d'onde B1 est décalée d'une distance égale à trois fois le pas p entre des capteurs élémentaires 41 adjacents par rapport à l'image formée par les rayons appartenant de la deuxième bande de longueurs d'onde B2.

En référence aux figures 2 et 6, de manière à éliminer les composantes du signal correspondant au fond de la scène à analyser, le dispositif est avantageusement équipé d'un filtre passe-bandes 6 adapté pour ne laisser passer que les rayonnements de longueurs d'onde comprises dans les deux bandes de longueurs d'onde à analyser B1 et B2. Le filtre passe bandes 6 peut notamment être déposé sur la lame 3, mais peut être aussi intégré dans l'optique 2 ou sur le hublot 44. Le filtre passe-bandes 6 peut en outre être optimisé de manière à égaliser ou optimiser le rapport entre les intensités des rayonnements dans les deux bandes de longueurs d'onde B1 et B2 à analyser.

Le matériau utilisé pour la matrice de détection peut être, par exemple, de l'InSb, du HgCdTe, du PtSi, de l'InGaAs, du GaAs, du PbS ou du PbSe, matériaux adaptés à une utilisation dans ces deux bandes spectrales et peut être ou non refroidi selon l'application. La matrice de détection 46 est par exemple de type multispectral QWIPs.

La lame optique à faces planes et parallèles 3 est avantageusement traitée antireflets pour éviter les pertes de flux.

En référence à la figure 14, la lame optique 3 peut être placée dans l'enceinte cryogénique 42 du capteur d'imagerie 4, ceci permettant d'éviter des variations de ses caractéristiques optiques en fonction des températures d'utilisation.

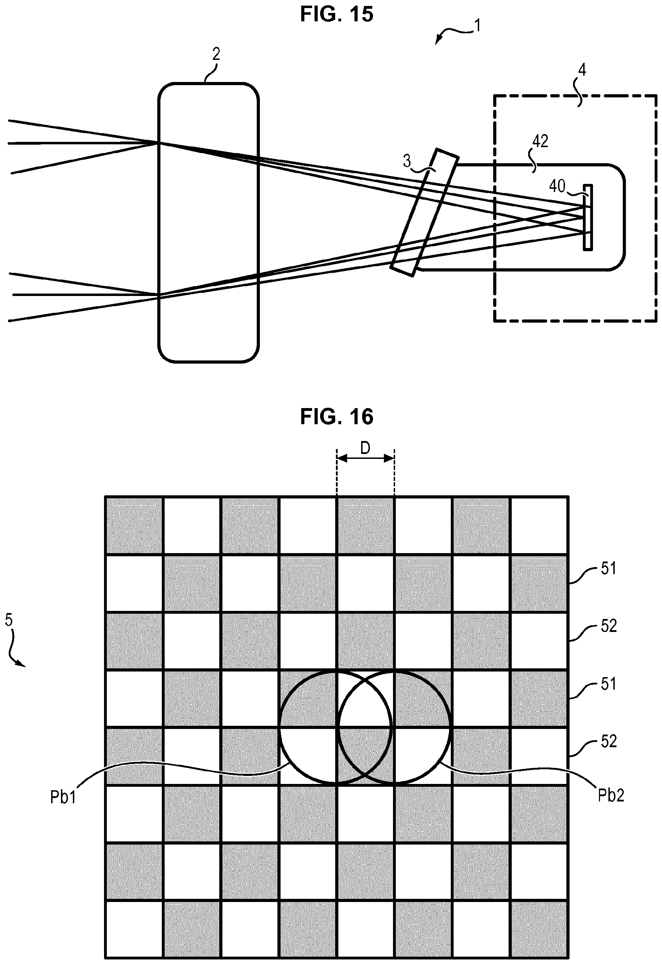

En référence à la figure 15, le hublot de l'enceinte cryogénique 42 peut être constitué de la lame 3, de façon à minimiser le nombre de composants optiques utilisés.

Le choix de l'angle d'inclinaison α et de son orientation est avantageusement adapté à l'application envisagée, afin de privilégier les informations haut/bas ou droite/gauche ou selon à axe à 45° si l'on veut une information homogène entre ces deux axes. Par example dans le cas d'un système au sol recherchant la direction (ou azimut) de la menace plutôt que sa position vertical (ou élévation), on choisit un angle α de manière à ce que le décalage soit horizontal.

En référence aux figures 6, 16, 17 et 18, le filtre passe bande 6 peut avantageusement équiper le capteur d'imagerie 4 sous la forme d'un filtre passe bande spatialement sélectif 5 constitué d'une alternance de premiers filtres élémentaires 51 laissant passer les longueurs d'onde incluses dans la première bande de longueurs d'onde B1 et de seconds filtres élémentaires 52 laissant passer les longueurs d'onde incluses dans la seconde bande de longueurs d'onde B2, ces filtres étant disposés sur ou au voisinage de la surface du capteur d'imagerie 4 et alignés avec les capteurs élémentaires 41.

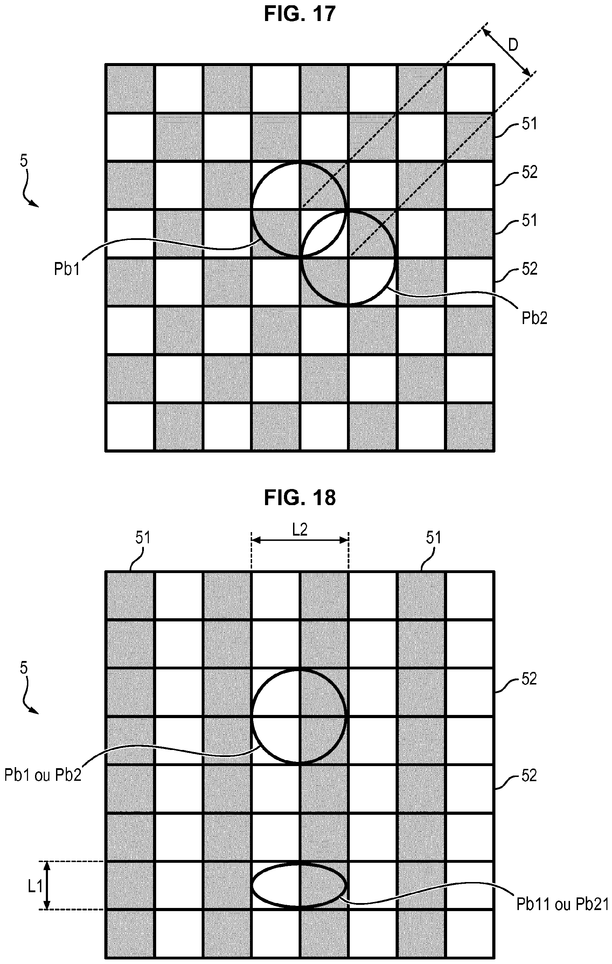

Selon une première variante de réalisation et en référence aux figures 16 et 17, les premiers filtres élémentaires 51 et les seconds filtres élémentaires 52 sont des carrés d'une largeur égale au pas de la matrice de capteurs élémentaires 41, si ceux-ci son carrés, dans la direction de décalage et disposés selon une répartition matricielle en damier. Dans le cas où les capteurs élémentaires ne sont pas carrés, la dimension des filtres est adaptée dans les deux dimensions pour couvrir les capteurs élémentaires. La définition optique ou spot optique de l'optique d'imagerie 4 est avantageusement choisie de manière à ce que les images Pb1 et Pb2 d'une source ponctuelle sur la surface sensible 40 du capteur d'imagerie 4 soient de dimensions sensiblement égales à deux fois le pas des capteurs élémentaires 41 de la surface sensible matricielle dans la direction de décalage (voir figures 16, 17 et 18).

En référence à la figure 18, alternativement la définition optique ou spot optique de l'optique d'imagerie 4 est avantageusement choisie de manière à ce que les images Pb11 et Pb21 d'une source ponctuelle sur la surface sensible 40 du capteur d'imagerie 4 aient une dimension L2 selon la direction de décalage sensiblement égale à deux fois le pas de la matrice de capteurs élémentaires 41 dans la direction de décalage et une dimension L1 selon la direction perpendiculaire à la direction de décalage sensiblement égale au pas des capteurs élémentaires 41 dans la direction perpendiculaire à la direction de décalage .

En référence à la figure 16, et pour éviter les problèmes de masquage, la lame optique 3 est avantageusement choisie de manière à ce que le décalage D soit supérieur à une valeur minimale fixée au pas entre deux capteurs élémentaires 41. Dans ce cas il conviendra de comparer les signaux sur chaque bloc de quatre capteurs élémentaires 41 adjacents.

En référence à la figure 17, la lame optique 3 est de préférence choisi de manière à ce que le décalage D soit fixé à la taille de la diagonale d'un capteur élémentaire 41 et orienté selon l'une des diagonales des capteurs élémentaires 41 de façon à optimiser le flux reçu pour chaque capteur élémentaire 41.

Selon une seconde variante de réalisation et en référence à la figure 18, les premiers filtres élémentaires 51 et les seconds filtres élémentaires 52 sont disposés en bandes perpendiculaires à la direction du décalage D introduit par la lame 3 et d'une largeur égale au pas de la matrice de capteurs élémentaires 41 dans la direction de décalage.

Cette variante est particulièrement pertinente dans le cas où seule une information selon une direction est recherchée (par example une information d'azimut). Dans cette configuration, la lame 3 est avantageusement choisie de manière à ce que le décalage D soit orienté selon cette direction et les bandes de filtres élémentaires 51 et 52 selon un axe perpendiculaire. Le spot optique (« Point Spread Function ») de l'objectif d'imagerie est avantageusement choisi de manière à ce que les images Pb1 et Pb2 aient une taille sensiblement égale à deux fois le pas de la matrice de capteurs élémentaires 41 dans la direction de décalage.

A la différence des autres systèmes de décalage spectral, le système de détection et d'imagerie 1 proposé permet de conserver une résolution optique (un spot optique) du système de détection égale à la taille d'un détecteur élémentaire du capteur, puisque la lame 3 décale latéralement les images dans les deux bandes sans en dégrader sensiblement la qualité. De plus, à la différence des autres systèmes et notamment les capteurs à double sensibilité spectrale par utilisation de capteurs élémentaires à deux types de sensibilité, ou les systèmes à filtre local au niveau du détecteur qui dégradent la résolution optique du système, puisqu'il est nécessaire, pour éviter tout problème de masquage de la cible, d'adapter la résolution optique de ce système ou spot optique (PSF ou «Point Spread Function ») pour couvrir deux capteurs élémentaires et éviter ainsi les zones aveugles, le système de détection et d'imagerie 1 proposé conserve une résolution optique égale à la taille d'un capteur élémentaire pour chacune des bandes spectrales analysées.

De plus ce système permet, dans le cas où la résolution optique - le spot optique - du système d'imagerie est égale à la taille d'un capteur élémentaire 41 et que l'on regarde des objets de taille image égale ou inférieure à celle des capteurs élémentaires 41, de mesurer, dans les deux bandes spectrales B1 et B2, les intensités d'émission du même objet visé, à la différence des autres systèmes où les capteurs élémentaires voisins ne voient pas le même objet visé et donc introduisent un biais à ce titre.

Par ailleurs, tout système utilisant un prisme en rayons convergents ne permettrait d'obtenir les mêmes résultats, car, en plus d'un décalage angulaire, qui dépend directement de la valeur de l'indice de réfraction du matériau et non de sa variation en fonction de la longueur d'onde comme dans l'invention, un prisme introduit une défocalisation différentielle entre les parties extrêmes du champ et est aussi générateur de distorsions optiques importantes, puisqu'utilisé dans un espace où les rayons sont convergents vers le plan du capteur. De plus la valeur de l'indice de réfraction du matériau utilisé pour ces primes, étant très sensible aux variations de sa température (phénomène important pour la plupart des matériaux infrarouges), ces dispositifs impliqueraient de stabiliser en température le prisme, pour avoir une déviation angulaire homogène, quelle que soit la température d'utilisation du système, ce qui va à l'encontre de la simplicité de ces-dits systèmes.

Le système de détection et d'imagerie 1 proposé est particulièrement adapté à la détection de cibles ponctuelles rayonnantes, et peut être utilisée, en autre, dans le cadre de détection de pointeur ou de désignateur laser, la seule limitation venant du spectre de sensibilité du capteur utilisé. Le système de détection et d'imagerie 1 proposé a été présenté pour une utilisation dans la bande II infrarouge comprenant les longueurs d'onde comprises entre 3,5 et 4,2 micromètres (bande IIa) ou comprises entre 4,55 et 4,8 micromètres (bande IIb), mais il peut également être utilisé dans d'autres bandes spectrales infrarouges et notamment la bande infrarouge I comprenant les longueurs d'onde comprises typiquement entre 1,8 et 2,8 micromètres, les bandes laser infrarouges correspondant typiquement aux longueurs d'onde 1, 064 micromètres et 1,54 micromètres, ou à la bande proche infrarouge comprenant les longueurs d'onde comprises typiquement entre 0,78 micromètres et 1,1 micromètres.

Les tableaux suivants donnent les résultats obtenus pour quelques configurations et matériaux pour différentes bandes spectrales, à titre d'exemple illustratif et non limitatif.

Bande I - Bande IIb

| Matériau | Saphir | Mg0 | MgF2 |
|---|---|---|---|
| Épaisseur en mm | 3,55 | 4,8 | 7,8 |
| Angle a ° | 5 | 5 | 5 |
| Angle a rad | 0,087 | 0,087 | 0,087 |
| $\lambda 2$ | 4675 | 4675 | 4675 |
| $\lambda 1$ | 2249 | 2249 | 2249 |
| $n(\lambda 2)$ | 1,6406 | 1,6373 | 1,3390 |
| $n(\lambda 1)$ | 1,7323 | 1,7043 | 1,3660 |
| Décalage en $\mu$m | 10,019 | 10,078 | 10,072 |

Bande I - Bande IIa

| Matériau | Saphir | Mg0 | MgF2 |
|---|---|---|---|
| Épaisseur en mm | 3,2 | 4,95 | 6,9 |
| Angle a° | 10 | 10 | 10 |
| Angle a rad | 0,175 | 0,175 | 0,175 |
| $\lambda 2$ | 3850 | 3850 | 3850 |
| $\lambda 1$ | 2249 | 2249 | 2249 |
| $n(\lambda 2)$ | 1,6806 | 1,6714 | 1,3507 |
| $n(\lambda 1)$ | 1,7323 | 1,7043 | 1,3660 |
| Décalage en $\mu$m | 10,023 | 10,058 | 10,062 |

1,064 $\mu$m et Bande I

| Matériau | Saphir | Mg0 | Silice | MgF2 |
|---|---|---|---|---|
| Épaisseur en mm | 7,8 | 6,2 | 5,05 | 9,8 |
| Angle a° | 10 | 15 | 15 | 15 |

(suite)

| Matériau | Saphir | Mg0 | Silice | MgF2 |
|---|---|---|---|---|
| Angle a rad | 0,175 | 0,262 | 0,262 | 0,262 |
| $\lambda 2$ | 2249 | 2249 | 2249 | 2249 |
| $\lambda 1$ | 1064 | 1064 | 1064 | 1064 |
| $n(\lambda 2)$ | 1,7323 | 1,7043 | 1,4342 | 1,3660 |
| $n(\lambda 1)$ | 1,7545 | 1,7220 | 1,4496 | 1,3732 |
| Décalage en $\mu$m | 10,046 | 10,026 | 10,056 | 10,038 |

1,54 $\mu$m et Bande I

| Matériau | Saphir | Mg0 | Silice |
|---|---|---|---|
| Épaisseur en mm | 8,2 | 10,1 | 7,8 |
| Angle a ° | 15 | 15 | 15 |
| Angle a rad | 0,262 | 0,262 | 0,262 |
| $\lambda 2$ | 2249 | 2249 | 2249 |
| $\lambda 1$ | 1540 | 1540 | 1540 |
| $n(\lambda 2)$ | 1,7323 | 1,7043 | 1,4342 |
| $n(\lambda 1)$ | 1,7462 | 1,7151 | 1,4441 |
| Décalage en $\mu$m | 10,096 | 10,052 | 10,049 |

1,54 $\mu$m et Bande IIb

| Matériau | Saphir | Mg0 | MgF2 |
|---|---|---|---|
| Épaisseur en mm | 3,12 | 4,15 | 6,8 |
| Angle a° | 5 | 5 | 5 |
| Angle a rad | 0,087 | 0,087 | 0,087 |
| $\lambda 2$ | 4675 | 4675 | 4675 |
| $\lambda 1$ | 1540 | 1540 | 1540 |
| $n(\lambda 2)$ | 1,6406 | 1,6373 | 1,3390 |
| $n(\lambda 1)$ | 1,7464 | 1,7151 | 1,3699 |
| Décalage en $\mu$m | 10,075 | 10,062 | 10,014 |

1,54 $\mu$m et Bande IIa

| Matériau | Saphir | Mg0 | MgF2 |
|---|---|---|---|
| Épaisseur en mm | 3,4 | 5 | 7,4 |
| Angle a ° | 7,5 | 7,5 | 7,5 |
| Angle a rad | 0,131 | 0,131 | 0,131 |
| $\lambda 2$ | 3850 | 3850 | 3850 |
| $\lambda 1$ | 1540 | 1540 | 1540 |
| $n(\lambda 2)$ | 1,6806 | 1,6714 | 1,3507 |
| $n(\lambda 1)$ | 1,7462 | 1,7151 | 1,3699 |
| Décalage en $\mu$m | 10,008 | 10,031 | 10,076 |

Proche IR et 1,064 $\mu$m

| Matériau | Saphir | Mg0 | Silice | MgF2 |
|---|---|---|---|---|
| Épaisseur en mm | 22,8 | 17,1 | 23,6 | 37,5 |
| Angle a° | 15 | 15 | 15 | 15 |

(suite)

| Matériau | Saphir | Mg0 | Silice | MgF2 |
|---|---|---|---|---|
| Angle a rad | 0,262 | 0,262 | 0,262 | 0,262 |
| $\lambda 2$ | 1064 | 1064 | 1064 | 1064 |
| $\lambda 1$ | 820 | 820 | 820 | 820 |
| $n(\lambda 2)$ | 1,7545 | 1,7220 | 1,4496 | 1,3732 |
| $n(\lambda 1)$ | 1,7596 | 1,7285 | 1,4530 | 1,3751 |
| Décalage en $\mu$m | 10,092 | 10,058 | 10,087 | 10,065 |

Proche IR et 1,54 $\mu$m

| Matériau | Saphir | Mg0 | Silice | MgF2 |
|---|---|---|---|---|
| Épaisseur en mm | 8,7 | 8,28 | 8,9 | 13,6 |
| Angle a ° | 15 | 15 | 15 | 15 |
| Angle a rad | 0,262 | 0,262 | 0,262 | 0,262 |
| $\lambda 2$ | 1540 | 1540 | 1540 | 1540 |
| $\lambda 1$ | 820 | 820 | 820 | 820 |
| $n(\lambda 2)$ | 1,7464 | 1,7151 | 1,4441 | 1,3699 |
| $n(\lambda 1)$ | 1,7596 | 1,7285 | 1,4530 | 1,3751 |
| Décalage en $\mu$m | 10,037 | 10,019 | 10,060 | 10,030 |

Bande I et Proche IR

| Matériau | Silice |
|---|---|
| Épaisseur en mm | 4,15 |
| Angle a° | 15 |
| Angle a rad | 0,262 |
| $\lambda 2$ | 2249 |
| $\lambda 1$ | 820 |
| $n(\lambda 2)$ | 1,4342 |
| $n(\lambda 1)$ | 1,4530 |
| Décalage en $\mu$m | 10,037 |

## Revendications

1. Système de détection et d'imagerie infrarouge (1) par analyse spectrale dans plusieurs bandes de longueurs d'onde comportant :

    - un capteur d'imagerie (4) comportant une pluralité de capteurs élémentaires (41) formant ensemble une surface sensible matricielle (40);
    - une optique d'imagerie (2) adaptée pour former sur la surface sensible (40) du capteur d'imagerie (4), une première image (Pb1) de la scène à analyser dans une première bande de longueurs d'onde (B1), et au moins une seconde image (Pb2) de la scène à analyser dans une seconde bande de longueurs d'onde (B2),
    - un dispositif optique (3) adapté pour décaler la première image (Pb1) par rapport à la seconde image (Pb2) dans le plan de la surface sensible,

    le système de détection et d'imagerie infrarouge (1) étant **caractérisé en ce que** le dispositif optique (3) adapté pour décaler la première image (Pb1) par rapport à la seconde image (Pb2) dans le plan de la surface sensible est constitué d'une unique lame optique fixe à faces parallèles, le décalage entre les images étant selon une direction définie par une ligne, une colonne ou une diagonale de capteurs élémentaires, la distance de décalage étant égale à la distance (p, dd) entre deux capteurs élémentaires (41) de la surface sensible matricielle selon cette direction ou à un multiple de cette distance, l'optique d'imagerie (2) étant un système optique de focalisation, l'unique lame optique fixe à faces parallèles (3) étant positionnée entre l'optique d'imagerie (2) et le capteur d'imagerie (4).

2.  Système de détection et d'imagerie (1) selon la revendication précédente, **caractérisé en ce que** le dispositif optique fixe (3) est une lame à faces planes et parallèles réalisée dans un matériau chromatique, ladite lame étant fixe et inclinée par rapport au plan de la surface sensible (40) du capteur d'imagerie (4).

3.  Système de détection et d'imagerie (1) selon l'une des revendications précédentes, **caractérisé en ce que** l'angle d'inclinaison ($\alpha$) de ladite lame (3), l'épaisseur (e) de celle-ci et son matériau sont adaptés pour que la distance de décalage soit égale à la distance (p, dd) entre deux capteurs élémentaires (41) de la surface sensible matricielle selon la direction de décalage ou à un multiple de cette distance (p, dd).

4.  Système de détection et d'imagerie (1) selon l'une des revendications précédentes, **caractérisé en ce que** le matériau optique chromatique de la lame (3), présente un coefficient de dispersion chromatique, défini comme le rapport entre la différence des indices de réfraction moyens pour les deux bandes de longueurs d'onde (B 1, B2) et leur valeur moyenne, supérieur à 0,002 et de préférence à 0,005.

5.  Système de détection et d'imagerie (1) selon l'une des revendications précédentes, **caractérisé en ce que** la lame (3) est en un matériau qui est choisi parmi les matériaux suivants : Saphir, Fluorure de Calcium, Fluorure de Barium, Fluorure de Sodium, Fluorure de Magnésium ou Oxyde de Magnésium et Silice.

6.  Système de détection et d'imagerie (1) selon l'une des revendications précédentes, **caractérisé en ce qu'**il comporte un filtre passe bandes (6) adapté pour optimiser le rapport des intensités des rayonnements dans la première (B1) et la deuxième (B2) bande de longueurs d'onde.

7.  Système de détection et d'imagerie (1) selon l'une des revendications précédentes, **caractérisé en ce que** l'optique d'imagerie (2) est adaptée pour que sa résolution optique soit de dimensions sensiblement égales à celles d'un capteur élémentaire (41) de la surface sensible matricielle.

8.  Système de détection et d'imagerie (1) selon l'une des revendications précédentes, **caractérisé en ce qu'**il comporte un filtre passe bande spatialement sélectif (5) constitué d'une alternance de premiers filtres élémentaires (51) laissant passer les longueurs d'onde comprises dans la première bande de longueurs d'onde (B1) et de seconds filtres élémentaires (52) laissant passer les longueurs d'onde comprises dans la seconde bande de longueurs d'onde (B2) et positionnés au voisinage de la surface sensible (40) du capteur d'imagerie (4).

9.  Système de détection et d'imagerie (1) selon la revendication précédente, **caractérisé en ce que** les premiers filtres élémentaires (51) et les seconds filtres élémentaires (52) du filtre passe bande spatialement sélectif (5) sont disposés selon une répartition matricielle en damier et sont d'une largeur égale à la distance (p, dd) entre deux capteurs élémentaires (41) dans la direction de décalage.

10. Système de détection et d'imagerie (1) selon la revendication 8, **caractérisé en ce que** les premiers filtres élémentaires (51) et les seconds filtres élémentaires (52) sont disposés en bandes perpendiculaires à la direction du décalage et sont d'une largeur égale à la distance (p, dd) entre deux capteurs élémentaires (41) dans la direction de décalage.

11. Système de détection et d'imagerie (1) selon l'une des revendications 8 à 10, **caractérisé en ce que** l'optique d'imagerie (2) est adaptée pour que sa résolution optique soit de dimension sensiblement égale à deux fois la distance (p, dd) entre deux capteurs élémentaires (41) de la surface sensible matricielle dans la direction de décalage.

12. Système de détection et d'imagerie (1) selon l'une des revendications 8 à 11, **caractérisé en ce que** l'optique d'imagerie (2) est adaptée pour que sa résolution optique ait une dimension selon la direction perpendiculaire à celle du décalage sensiblement égale à la distance (p, dd) entre deux capteurs élémentaires (41) de la surface sensible matricielle.

13. Système de détection et d'imagerie (1) selon l'une des revendications précédentes, **caractérisé en ce que** le capteur d'imagerie (4) et le dispositif optique fixe (3) sont placés dans une enceinte cryogénique (42).

14. Système de détection et d'imagerie (1) selon l'une des revendications précédentes, **caractérisé en ce que** la lame (3) constitue un hublot (44) d'une enceinte cryogénique (42) contenant le capteur d'imagerie (4).

**15.** Système de détection et d'imagerie (1) selon l'une des revendications précédentes **caractérisé en ce que** les deux bandes spectrales (B1) et (B2) sont choisies parmi les bandes spectrales suivantes :

- bandes infrarouge IIa ou IIb;
- bande infrarouge I;
- une ou deux bandes laser infrarouges ;
- bande proche infrarouge.

**Patentansprüche**

**1.** System zur Erkennung und Infrarot-Abbildung (1) durch Spektralanalyse in mehreren Wellenlängenbereichen, das folgendes umfasst:

- einen Abbildungssensor (4), der eine Mehrzahl Sensorelemente (41) umfasst, die zusammen eine empfindliche Matrixfläche (40) bilden;
- eine Abbildungsoptik (2), die geeignet ist, auf der empfindlichen Fläche (40) des Abbildungssensors (4) ein erstes Bild (Pb1) der Szene zu bilden, das in einem ersten Wellenlängenbereich (B1) analysiert werden soll, und zumindest ein zweites Bild (Pb2) der Szene, das in einem zweiten Wellenlängenbereich (B2) analysiert werden soll,
- eine optische Vorrichtung (3), die geeignet ist, das erste Bild (Pb1) gegenüber dem zweiten Bild (Pb2) in der Ebene der empfindlichen Fläche zu verschieben,

die System zur Erkennung und Infrarot-Abbildung (1) **dadurch gekennzeichnet ist, dass** die optische Vorrichtung (3), die geeignet ist, das erste Bild (Pb1) gegenüber dem zweiten Bild (Pb2) in der Ebene der empfindlichen Fläche zu verschieben, aus einer einzigen feststehenden optischen Platte mit parallelen Seiten besteht, und die Verschiebung zwischen den Bildern in einer Richtung erfolgt, die von einer Reihe, einer Säule oder einer Diagonalen von Sensorelementen definiert wird, und der Verschiebungsabstand gleich dem Abstand (p, dd) zwischen zwei Sensorelementen (41) der empfindlichen Matrixfläche in dieser Richtung oder einem Mehrfachen dieses Abstands ist, und die Abbildungsoptik (2) ein optisches Fokussierungssystem ist, wobei die einzige feststehende optische Platte mit parallelen Seiten (3) zwischen der Abbildungsoptik (2) und dem Abbildungssensor (4) positioniert ist.

**2.** System zur Erkennung und Abbildung (1) nach vorstehendem Anspruch, **dadurch gekennzeichnet, dass** die feststehende optische Vorrichtung (3) eine Platte mit ebenen und parallelen Seiten ist, die aus einem chromatischen Werkstoff ausgeführt ist, wobei die besagte Platte feststeht und gegenüber der Ebene der empfindlichen Fläche (40) des Abbildungssensors (4) geneigt ist.

**3.** System zur Erkennung und Abbildung (1) nach einem beliebigen der vorstehenden Ansprüche, **dadurch gekennzeichnet, dass** der Neigungswinkel ($\alpha$) der besagten Platte (3), deren Dicke (e) und ihr Werkstoff geeignet sind, dass der Verschiebungsabstand gleich dem Abstand (p, dd) zwischen zwei Sensorelementen (41) der empfindlichen Matrixfläche in der Verschiebungsrichtung oder einem Mehrfachen dieses Abstands (p, dd) ist.

**4.** System zur Erkennung und Abbildung (1) nach einem beliebigen der vorstehenden Ansprüche, **dadurch gekennzeichnet, dass** der chromatische optische Werkstoff der Platte (3) einen chromatischen Dispersionskoeffizienten aufweist, der als das Verhältnis zwischen der Differenz der mittleren Brechungsindexe für die beiden Wellenlängenbereiche (B1, B2) und ihrem Durchschnittswert definiert wird, der höher als 0,002 und bevorzugt über 0,005 beträgt.

**5.** System zur Erkennung und Abbildung (1) nach einem beliebigen der vorstehenden Ansprüche, **dadurch gekennzeichnet, dass** die Platte (3) aus einem Werkstoff besteht, der unter den folgenden Werkstoffen gewählt wird: Saphir, Calciumfluorid, Bariumfluorid, Natriumfluorid, Magnesiumfluorid oder Magnesiumoxid und Silizium.

**6.** System zur Erkennung und Abbildung (1) nach einem beliebigen der vorstehenden Ansprüche, **dadurch gekennzeichnet, dass** es ein Bandpassfilter (6) umfasst, das geeignet ist, das Verhältnis der Strahlungsintensitäten im ersten (B1) und im zweiten (B2) Wellenlängenbereich zu optimieren.

**7.** System zur Erkennung und Abbildung (1) nach einem beliebigen der vorstehenden Ansprüche, **dadurch gekennzeichnet, dass** die Abbildungsoptik (2) so angepasst ist, dass ihre optische Auflösung von deutlich gleichen Abmessungen wie diejenigen eines Sensorelements (41) der empfindlichen Matrixfläche ist.

8. System zur Erkennung und Abbildung (1) nach einem beliebigen der vorstehenden Ansprüche, **dadurch gekennzeichnet, dass** es ein räumlich selektives Bandpassfilter (5) umfasst, das aus ersten Filterelementen (51) besteht, die im ersten Wellenlängenbereich (B1) enthaltene Wellenlängen passieren lassen, in Abwechslung mit zweiten Filterelementen (52), die im zweiten Wellenlängenbereich (B2) enthaltene Wellenlängen passieren lassen, und die in der Nähe der empfindlichen Fläche (40) des Abbildungssensors (4) positioniert sind.

9. System zur Erkennung und Abbildung (1) nach vorstehendem Anspruch, **dadurch gekennzeichnet, dass** die ersten Filterelemente (51) und die zweiten Filterelemente (52) des räumlich selektiven Bandpassfilters (5) in einer Matrixverteilung im Schachbrettmuster angeordnet sind und eine Breite gleich dem Abstand (p, dd) zwischen zwei Sensorelementen (41) in der Verschiebungsrichtung haben.

10. System zur Erkennung und Abbildung (1) nach Anspruch 8, **dadurch gekennzeichnet, dass** die ersten Filterelemente (51) und die zweiten Filterelemente (52) in zur Verschiebungsrichtung senkrechten Reihen angeordnet sind und eine Breite gleich dem Abstand (p, dd) zwischen zwei Sensorelementen (41) in der Verschiebungsrichtung haben.

11. System zur Erkennung und Abbildung (1) nach einem beliebigen der vorstehenden Ansprüche 8 bis 10, **dadurch gekennzeichnet, dass** die Abbildungsoptik (2) so angepasst ist, dass ihre optische Auflösung von deutlich gleichen Abmessungen wie das Doppelte des Abstands (p, dd) zwischen zwei Sensorelementen (41) der empfindlichen Matrixfläche in der Verschiebungsrichtung ist.

12. System zur Erkennung und Abbildung (1) nach einem beliebigen der vorstehenden Ansprüche 8 bis 11, **dadurch gekennzeichnet, dass** die Abbildungsoptik (2) so angepasst ist, dass ihre optische Auflösung eine Abmessung gemäß der zur Verschiebung senkrechten Richtung gleich dem Abstand (p, dd) zwischen zwei Sensorelementen (41) der empfindlichen Matrixfläche hat.

13. System zur Erkennung und Abbildung (1) nach einem beliebigen der vorstehenden Ansprüche, **dadurch gekennzeichnet, dass** der Abbildungssensor (4) und die feststehende optische Vorrichtung (3) in einem kryogenen Gehäuse (42) platziert sind.

14. System zur Erkennung und Abbildung (1) nach einem beliebigen der vorstehenden Ansprüche, **dadurch gekennzeichnet, dass** die Platte (3) ein Bullauge (44) eines kryogenen Gehäuses (42) bildet, das den Abbildungssensor (4) enthält.

15. System zur Erkennung und Abbildung (1) nach einem beliebigen der vorstehenden Ansprüche, **dadurch gekennzeichnet, dass** die beiden spektralen Bereiche (B1) und (B2) unter den folgenden Spektralbereichen gewählt werden

    - Infrarotbereiche IIa oder IIb;
    - Infrarotbereich I;
    - Ein oder zwei Infrarot-Laserbereich(e);
    - Infrarotnaher Bereich.

**Claims**

1. An infrared imaging and detection system (1) by spectral analysis in several bands of wavelengths including:

    - an imaging sensor (4) including a plurality of elementary sensors (41) forming together a matrix sensitive surface (40);
    - an imaging optics (2) adapted for forming on the sensitive surface (40) of the imaging sensor (4), a first image (Pb1) of the scene to be analyzed in a first band of wavelengths (B1), and at least one second image (Pb2) of the scene to be analyzed in a second band of wavelengths (B2),
    - an optical device (3) adapted for shifting the first image (Pb1) relatively to the second image (Pb2) in the plane of the sensitive surface,

the infrared imaging and detection system (1) being **characterized in that** the optical device (3) adapted for shifting the first image (Pb1) relatively to the second image (Pb2) in the plane of the sensitive surface consists of a single fixed optical plate with parallel faces, the shift between the images being along a direction defined by a row, a column or a diagonal of elementary sensors, the shift distance being equal to the distance (p, dd) between two elementary sensors (41) of the matrix sensitive surface along this direction or to a multiple of this distance, the imaging optics (2) being an optical focusing system, the single fixed optical plate with parallel faces (3) being positioned between the imaging optics (2) and the imaging sensor (4).

2. The imaging and detection system (1) according to the preceding claim, **characterized in that** the fixed optical device (3) is a plate with planar and parallel faces made in a chromatic material, said plate being fixed and tilted with respect to the plane of the sensitive surface (40) of the imaging sensor (4).

3. The imaging and detection system (1) according to one of the preceding claims, **characterized in that** the tilt angle ($\alpha$) of said plate (3), the thickness (e) of the latter and its material, are adapted so that the shift distance is equal to the distance (p, dd) between two elementary sensors (41) of the matrix sensitive surface along the shift direction or to a multiple of this distance (p, dd).

4. The imaging and detection system (1) according to one of the preceding claims, **characterized in that** the chromatic optical material of the plate (3), has a chromatic dispersion coefficient, defined as the ratio between the difference of the average refractive indices for both bands of wavelengths (B1, B2) and their average value, of more than 0.002 and preferably more than 0.005.

5. The imaging and detection system (1) according to one of the preceding claims, **characterized in that** the plate (3) is a material which is selected from the following materials: sapphire, calcium fluoride, barium fluoride, sodium fluoride, magnesium fluoride or magnesium oxide and silica.

6. The imaging and detection system (1) according to one of the preceding claims, **characterized in that** it includes a band-pass filter (6) adapted for optimizing the ratio of the intensities of the radiations in the first (B1) and the second (B2) band of wavelengths.

7. The imaging and detection system (1) according to one of the preceding claims, **characterized in that** the imaging optics (2) is adapted so that its optical resolution is of dimensions substantially equal to those of an elementary sensor (41) of the sensitive matrix surface.

8. The imaging and detection system (1) according to one of the preceding claims, **characterized in that** it includes a spatially selective pass-band filter (5) consisting of an alternation of first elementary filters (51) letting through the wavelengths comprised in the first band of wavelengths (B1) and of second elementary filters (52) letting through the wavelengths comprised in the second band of wavelengths (B2) and positioned in the vicinity of the sensitive surface (40) of the imaging sensor (4).

9. The imaging and detection system (1) according to the preceding claim, **characterized in that** the first elementary filters (51) and the second elementary filters (52) of the spatially selective band-pass filter (5) are positioned according to a checkerboard matrix distribution and are of a width equal to the distance (p, dd) between two elementary sensors (41) in the shift direction.

10. The imaging and detection system (1) according to claim 8, **characterized in that** the first elementary filters (51) and the second elementary filters (52) are positioned in bands perpendicular to the direction of the shift and are of a width equal to the distance (p, dd) between two elementary sensors (41) in the shift direction.

11. The imaging and detection system (1) according to one of claims 8 to 10, **characterized in that** the imaging optics (2) is adapted so that its optical resolution is of a dimension substantially equal to twice the distance (p, dd) between two elementary sensors (41) of the matrix sensitive surface in the shift direction.

12. The imaging and detection system (1) according to one of claims 8 to 11, **characterized in that** the imaging optics (2) is adapted so that its optical resolution has a dimension along the direction perpendicular to that of the shift substantially equal to the distance (p, dd) between two elementary sensors (41) of the sensitive matrix surface.

13. The imaging and detection system (1) according to one of the preceding claims, **characterized in that** the imaging sensor (4) and the fixed optical device (3) are placed in a cryogenic chamber (42).

14. The imaging and detection system (1) according to one of the preceding claims, **characterized in that** the plate (3) forms a window (44) of a cryogenic chamber (42) containing the imaging sensor (4).

15. The imaging and detection system (1) according to one of the preceding claims, **characterized in that** both spectral bands (B1) and (B2) are selected from the following spectral bands:

- infrared bands IIa or IIb;
- infrared band I;
- one or two infrared laser bands;

near infrared band.

## FIG. 1

## FIG. 2

## FIG. 3

## FIG. 4

# FIG. 5

# FIG. 6

# FIG. 7

# FIG. 8

## FIG. 9

## FIG. 10

## FIG. 11

## FIG. 12

## FIG. 13

## FIG. 14

## FIG. 15

## FIG. 16

## FIG. 17

## FIG. 18

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1718067 A1
- US 7592593 B2
- US 8014062 B2
- EP 1915781 B1
- US 8238026 B1
- US 7655911 B2
- US 6236508 B1
- US 7760227 B2

- EP 1564987 A1
- EP 2221655 A1
- JP 2001201400 A
- US 5149970 A
- JP 2005266625 A
- JP 2006186512 A
- US 2004208223 A1
- US 2008122963 A